# EUROPEAN PATENT APPLICATION

(11) **EP 2 980 778 A1**
(43) Date of publication of application: **03.02.2016**
(21) Application number: 15169301.7
(22) Date of filing: 27.05.2015
(51) Int. Cl.: G09F 3/20, H04B 1/10

(54) **ELECTRONIC SHELF LABEL TAG AND ELECTRONIC SHELF LABEL GATEWAY WITH ADJACENT CHANNEL REMOVAL FEATURE**

(30) Priority: 31.07.2014 KR 20140098382; 10.11.2014 KR 20140155276
(71) Applicant: Samsung Electro-Mechanics Co., Ltd., Suwon-Si, Gyeonggi-Do (KR)
(72) Inventor: CHO, Han Jin, Gyeonggi-Do (KR); RYU, Jong Gi, Gyeonggi-Do (KR); YOON, Dong Sik, Gyeonggi-Do (KR)
(74) Representative: Grünecker Patent- und Rechtsanwälte PartG mbB

(57) **Abstract**

An electronic shelf label tag may include a second antenna receiving a radio signal from an electronic shelf label gateway, a second wireless communications unit processing the radio signal received from the second antenna, and a second neighboring channel removal unit connected between the second antenna and the second wireless communications unit to remove a neighboring channel signal having a frequency lower than a frequency of a communications channel signal by a preset frequency interval. A signal having a frequency lower than that of the communications channel by a preset amount among signals of wireless communications networks different from a currently used communications network may be removed, whereby reception sensitivity of the electronic shelf label tag may be improved.

## Description

### CROSS-REFERENCE TO RELATED APPLICATION

This application claims priority to, and the benefit of, Korean Patent Application Nos. 10-2014-0098382 filed on July 31, 2014 and 10-2014-0155276 filed on November 10, 2014, with the Korean Intellectual Property Office, the disclosures of which are incorporated herein by reference.

### BACKGROUND

This application relates to an electronic shelf label tag and an electronic shelf label gateway capable of preventing degradation in reception sensitivity due to an adjacent channel having a frequency lower than that of a communications channel.

A scheme of displaying price information manually written or printed on paper tags has been used as a scheme for displaying product information for store customers on product display stands. However, such a paper tag scheme may be disadvantageous, in that paper tags must be replaced whenever product price information is changed or products are changed.

Research into and development of an electronic tag (hereinafter, referred to as an electronic shelf label (ESL) tag) capable of overcoming the disadvantages of the paper tag scheme as described above have been conducted. Electronic shelf label tags have been applied to some product display stands. Thus, an electronic shelf label system including a plurality of electronic shelf label tags may be installed in a store.

Typically, such an electronic shelf label system is a system which may be installed on the product display stand to electronically display and change product information.

The electronic shelf label system may include an electronic shelf label server, a plurality of electronic shelf label gateways, connected to the electronic shelf label server in a wired scheme, and a plurality of electronic shelf label tag groups, wirelessly connected to each of the plurality of electronic shelf label gateways.

Here, each of the plurality of electronic shelf label tag groups may include a plurality of electronic shelf label tags.

The electronic shelf label server may communicate with each of the plurality of electronic shelf label gateways in the wired scheme to provide product information including price information. Each of the plurality of electronic shelf label gateways may transmit product information received from the electronic shelf label server to corresponding electronic shelf label tags through wireless communications. In this case, the electronic shelf label tag group may receive the product information through wireless communications and display the price information included in the product information on a display unit.

Each of the plurality of electronic shelf label gateways may form a personal area network (PAN) communications network in order to separately perform wireless communications within each group including the plurality of electronic shelf label tags, wherein the plurality of electronic shelf label tag groups are differentiated from each other by group identification (ID) and the plurality of electronic shelf label tags may be differentiated from each other by an identification (ID) (e.g., a medium access control (MAC) address).

The electronic shelf label system described above has advantages, in that the product information may be automatically updated through a preset wireless communications scheme and may be rapidly changed. Here, the preset wireless communications scheme may be one of ZigBee^{®}, Wi-Fi, Cellular communications, and Bluetooth communications. For example, 2.4GHz ZigBee communications may be used in wireless communications between the electronic shelf label gateway 200 and the plurality of electronic shelf label tags 300.

In an existing electronic shelf label system, in the case that a secondary wireless communications network within a frequency lower than a central frequency of a communications channel used by the electronic shelf label system is used in the vicinity of the electronic shelf label tag system, a signal of the secondary wireless communications network may be introduced into the electronic shelf label tag system. When the signal the secondary wireless communications network is introduced into the electronic shelf label tag, since the introduced signal causes reception sensitivity of the electronic shelf label tag to be degraded due to acting as noise in a communications band of the electronic shelf label tag, and so forth, the signal from a secondary wireless communications network described above should be removed.

For example, when a signal having a high level of power, from among radio signals within a frequency lower than the central frequency of the communications channel, among signals of a communications network different from the communications network used by the electronic shelf label tag, is introduced into the electronic shelf label tag while the electronic shelf label tag performs communications, reception sensitivity of a communications signal of the electronic shelf label tag may be significantly degraded.

Particularly, when a neighboring channel signal having a frequency lower than the central frequency of the communications channel used by the electronic shelf label system by about 300MHz or a neighboring channel signal having a frequency lower than the central frequency of the communications channel by about 500MHz, among radio signals of adjacent wireless communications networks using the lower frequency is introduced, reception sensitivity is rapidly degraded.

Therefore, in the existing electronic shelf label system, such a neighboring channel signal within the lower frequency that significantly degrades reception sensitivity among the radio signals of the communications networks used in the neighborhood should be rejected so as not to be introduced to the electronic shelf label system.

### SUMMARY

An exemplary embodiment in the present disclosure may provide an electronic shelf label tag and an electronic shelf label gateway capable of improving reception sensitivity by removing a neighboring channel signal having a frequency lower than a frequency of a communications channel by a preset amount among signals of wireless communications networks different from a currently used communications network.

According to an exemplary embodiment in the present disclosure, an electronic shelf label gateway transmitting a radio signal including identification ID from an electronic shelf label server to an electronic shelf label tag and responding to a data request from the electronic shelf label tag may include: a first antenna receiving the radio signal from the electronic shelf label tag; a first wireless communications unit processing the radio signal received from the first antenna; and a first neighboring channel removal unit connected between the first antenna and the first wireless communications unit to remove a neighboring channel signal having a frequency lower than a frequency of a communications channel signal by a preset frequency interval.

According to another exemplary embodiment in the present disclosure, an electronic shelf label tag receiving a radio signal including identification ID from an electronic shelf label server through an electronic shelf label gateway and requesting data from the electronic shelf label server through the electronic shelf label gateway when identification ID included in the radio signal is matched to self identification ID may include: a second antenna receiving the radio signal from the electronic shelf label gateway; a second wireless communications unit processing the radio signal received from the second antenna; and a second neighboring channel removal unit connected between the second antenna and the second wireless communications unit to remove a neighboring channel signal having a frequency lower than a frequency of a communications channel signal by a preset frequency interval.

Therefore, according to an exemplary embodiment in the present disclosure, since a signal having a frequency lower than a frequency of a communications channel by a preset frequency interval among signals of wireless communications networks different from a currently used communications network may be removed, whereby reception sensitivity of an electronic shelf label tag or an electronic shelf label gateway may be improved.

### BRIEF DESCRIPTION OF DRAWINGS

The above and other aspects, features and other advantages of the present disclosure will be more clearly understood from the following detailed description taken in conjunction with the accompanying drawings, in which:
FIG. 1 is a view of an electronic shelf label system according to an exemplary embodiment in the present disclosure;
FIG. 2 is a block diagram of an electronic shelf label gateway according to an exemplary embodiment in the present disclosure;
FIGS. 3A, 3B, and 3C are diagrams illustrating a first neighboring channel removal unit according to an exemplary embodiment in the present disclosure;
FIG. 4 is a diagram conceptually illustrating an operation of the first neighboring channel removal unit illustrated in FIGS. 3A and 3B;
FIG. 5 is a diagram conceptually illustrating an operation of the first neighboring channel removal unit illustrated in FIG. 3C;
FIG. 6 is a block diagram of an electronic shelf label tag according to an exemplary embodiment in the present disclosure;
FIGS. 7A, 7B, and 7C are diagrams illustrating a second neighboring channel removal unit according to an exemplary embodiment in the present disclosure;
FIG. 8 is a diagram conceptually illustrating an operation of the second neighboring channel removal unit illustrated in FIGS. 7A and 7B;
FIG. 9 is a diagram conceptually illustrating an operation of the second neighboring channel removal unit illustrated in FIG. 7C;
FIG. 10 is a diagram illustrating input and output signals of the first and second neighboring channel removal units according to an exemplary embodiment in the present disclosure;
FIG. 11 is a diagram illustrating a first frequency interval according to an exemplary embodiment in the present disclosure; and
FIG. 12 is a diagram illustrating a second frequency interval according to an exemplary embodiment in the present disclosure.

### DETAILED DESCRIPTION

Hereinafter, embodiments of the present disclosure will be described in detail with reference to the accompanying drawings.

The disclosure may, however, be embodied in many different forms and should not be construed as being limited to the embodiments set forth herein. Rather, these embodiments are provided so that this disclosure will be thorough and complete, and will fully convey the scope of the disclosure to those skilled in the art.

In the drawings, the shapes and dimensions of elements may be exaggerated for clarity, and the same reference numerals will be used throughout to designate the same or like elements.

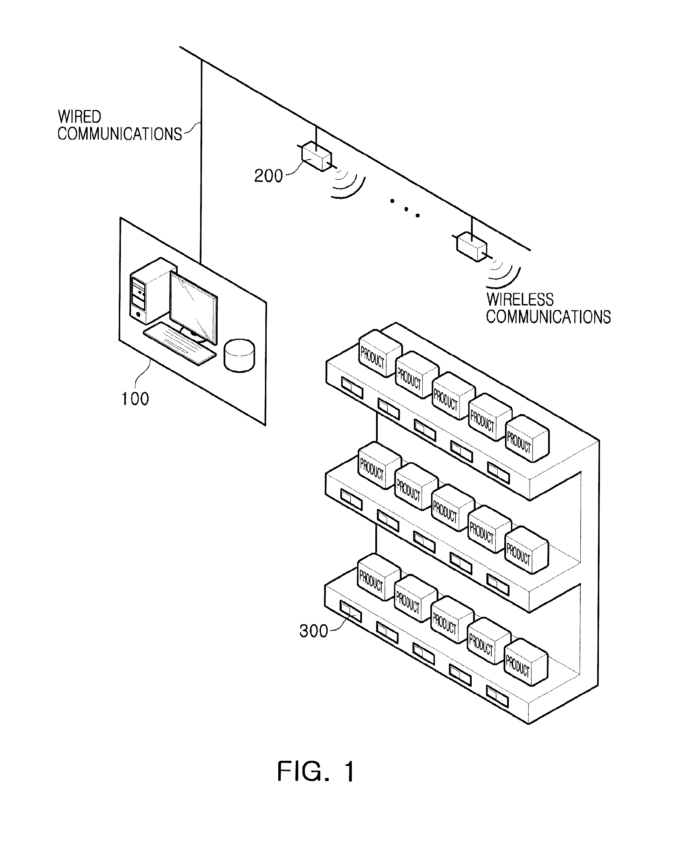

FIG. 1 is a view of an electronic shelf label system according to an exemplary embodiment in the present disclosure.

Referring to FIG. 1, the electronic shelf label system according to an exemplary embodiment in the present disclosure may include an electronic shelf label server 100, at least one electronic shelf label gateway 200, and a plurality of electronic shelf label tags 300.

The electronic shelf label server 100 may be connected to the electronic shelf label gateway 200 by a wired communications network to provide data including product information related to a product such as a price, and the like to the electronic shelf label gateway 200.

The electronic shelf label gateway 200 may connected to the plurality of electronic shelf label tags 300 by a preset wireless communications network to transmit a radio signal including identification ID from the electronic shelf label server 100 to the electronic shelf label tag 300 and transmit data including product information to be updated in response to a data request from the electronic shelf label tag 300.

The electronic shelf label tag 300 may receive the radio signal including identification ID from the electronic shelf label server 100 through the electronic shelf label gateway 200, and may request data from the electronic shelf label server 100 through the electronic shelf label gateway 200 when identification ID included in the radio signal is matched to self identification ID.

In this case, the preset wireless communications network may be one communications network of ZigBee, Wi-Fi, Cellular communications, and Bluetooth.

In the wireless communications environment described above, there is a problem in that a signal having a large amount of power used in a wireless communications network different from a currently used communications network is introduced. Particularly, a technical object improving reception sensitivity by removing a signal having a frequency lower than a frequency of a communications channel by a preset amount among signals of other wireless communications networks will be described below.

Typically, in a case in which a gateway transmitting data at very high power among gateways of other wireless communications networks is positioned adjacently to the electronic shelf label tag or the gateway, received power may also be -30dBm or more. Particularly, a plurality of wireless communications bands of two or more kinds may be present in large retail spaces such as malls, in which the electronic shelf label systems are installed, and in a case in which the gateway is installed on the ceiling of a store, a signal having higher power may be transmitted.

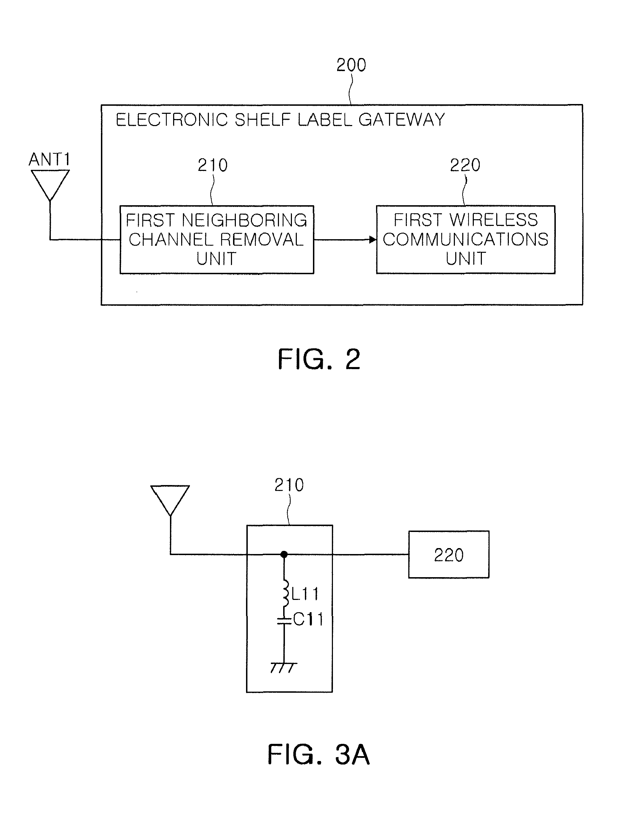

FIG. 2 is a block diagram of an electronic shelf label gateway according to an exemplary embodiment in the present disclosure.

Referring to FIG. 2, the electronic shelf label gateway according to an exemplary embodiment in the present disclosure may include a first antenna ANT1, a first wireless communications unit 220, and a first neighboring channel removal unit 210.

The first antenna ANT1 of the electronic shelf label gateway 200 may transmit the radio signal to the plurality of electronic shelf label tags 300 through the communications channel or receive the radio signal from the plurality of electronic shelf label tags 300 through the communications channel.

The first wireless communications unit 220 may process the radio signal received from the first antenna ANT1, by the first neighboring channel removal unit 210.

In this case, the first neighboring channel removal unit 210 may be connected between the first antenna ANT1 and the first wireless communications unit 220 to remove a neighboring channel signal Snh having a frequency lower than a frequency of a communications channel signal Sc by a preset frequency interval Δf, from a neighboring lower channel among neighboring channels of the out-band other than that of an in-band including the communications channel signal.

By way of example, according to an exemplary embodiment in the present disclosure, when a channel which is within 250MHz of the communications channel is defined as an adjacent channel, a channel having a frequency lower than the communications channel by a frequency interval within a frequency range of 250MHz to 650MHz, further than the adjacent channel, is defined as a neighboring channel. In a case in which the frequency signal included in a neighboring lower channel located at a lower portion than the frequency of the communications channel in a frequency domain among the neighboring channels is introduced into the electronic shelf label gateway, it has been confirmed that reception sensitivity is significantly degraded.

Therefore, the first neighboring channel removal unit 210 according to an exemplary embodiment in the present disclosure may remove the neighboring lower channel of the communications channel. As a result, the electronic shelf label gateway 200 may perform wireless communications without the degradation in reception sensitivity due to the neighboring lower channel.

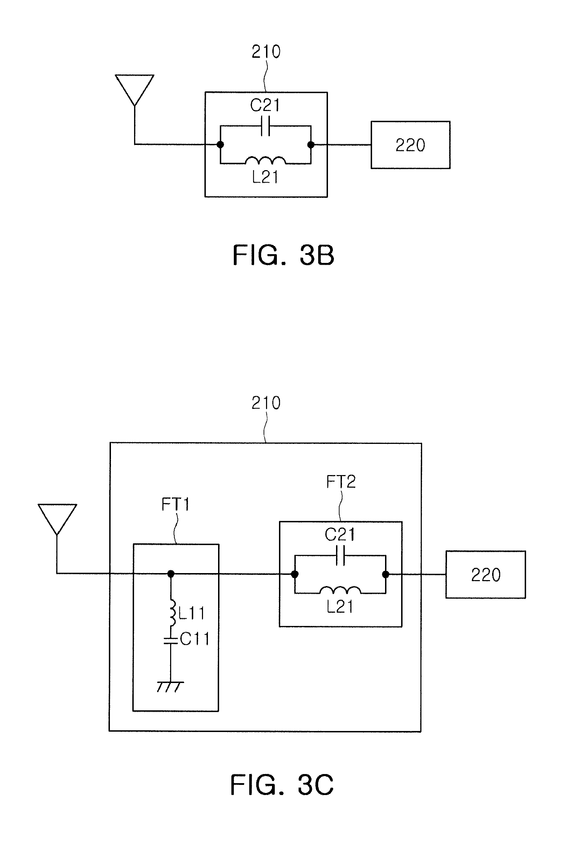

In addition, the first neighboring channel removal unit 210 may include at least one of a series resonance circuit and a parallel resonance circuit. A description thereof will be provided with reference to FIGS. 3A, 3B, and 3C.

FIGS. 3A, 3B, and 3C are diagrams illustrating the first neighboring channel removal unit according to an exemplary embodiment in the present disclosure.

FIG. 3A illustrates the series resonance circuit as a first implementation example of the first neighboring channel removal unit 210, FIG. 3B illustrates the parallel resonance circuit as a second implementation example of the first neighboring channel removal unit 210, and FIG. 3C illustrates the series resonance circuit and the parallel resonance circuit as a third implementation example of the first neighboring channel removal unit 210.

Referring to FIG. 3A, the first neighboring channel removal unit 210 may include a series LC resonance circuit having a first inductor L11 and a first capacitor C11 connected to each other in series between a signal line between the antenna ANT1 of the electronic shelf label gateway 200 and the first wireless communications unit 220 and a ground. For example, a resonance frequency of the series LC resonance circuit may correspond to a frequency lower than that of the communications channel by a frequency interval included in a frequency range of 250MHz to 350MHz or a frequency range of 550MHz to 650MHz among neighboring lower channels.

Referring to FIG. 3B, the first neighboring channel removal unit 210 may include a parallel LC resonance circuit having a second inductor L21 and a second capacitor C21 connected in parallel to a signal line between the antenna ANT1 of the electronic shelf label gateway 200 and the first wireless communications unit 220. For example, a resonance frequency of the parallel LC resonance circuit may correspond to a frequency lower than that of the communications channel by a frequency interval included in a frequency range of 250MHz to 350MHz or a frequency range of 550MHz to 650MHz among the neighboring lower channels.

Referring to FIGS. 3A and 3B, the first neighboring channel removal unit 210 may be implemented as the series LC resonance circuit or the parallel LC resonance circuit as described above to remove a first neighboring channel signal Snh1 having the frequency lower than that of the communications channel by a first frequency interval Δf1 included in the frequency range of 550 to 650MHz.

Alternatively, the first neighboring channel removal unit 210 may be implemented as the series LC resonance circuit or the parallel LC resonance circuit as described above to remove a second neighboring channel signal Snh2 having the frequency lower than that of the communications channel by a second frequency interval Δf2 included in the frequency range of 250 to 350MHz.

For example, the first frequency interval Δf1 may be a frequency of about 500MHz among any frequencies included in the frequency range of 550 to 650MHz, and the second frequency interval Δf2 may be a frequency of about 300MHz among any frequencies included in the frequency range of 250 to 350MHz.

Meanwhile, the first neighboring channel removal unit 210 may be a primary filter or at least a secondary filter including at least one of the series LC resonance circuit and the parallel LC resonance circuit.

For example, the first neighboring channel removal unit 210 may be the secondary filter which may include both of the series LC resonance circuit and the parallel LC resonance circuit. Alternatively, the first neighboring channel removal unit 210 may be a secondary or higher filter including at least one series LC resonance circuit and at least one parallel LC resonance circuit.

As such, in the case in which the first neighboring channel removal unit 210 is the secondary or higher filter including a plurality of resonance circuits, a plurality of resonance frequencies formed by each of the plurality of resonance circuits may be different from each other or some of the resonance frequencies may also be equal to each other.

For example, in the case in which the first neighboring channel removal unit 210 is implemented as at least one of the series LC resonance circuit and the parallel LC resonance circuit, the neighboring channel signal included in the neighboring lower channel may be reduced by about 20dB, in-band loss may also be 1dB or less.

In addition, in a case in which the first neighboring channel removal unit 210 described above is implemented as a multi-stage resonance circuit, the in-band loss may be significantly reduced and the neighboring channel signal may be further reduced. Meanwhile, in a case in which the first neighboring channel removal unit 210 is implemented as one-stage resonance circuit, since the first neighboring channel removal unit 210 may be implemented as a simplest resonance circuit using one L element and one C element, reception performance may be efficiently improved at minimal costs.

Referring to FIG. 3C, the first neighboring channel removal unit 210 may include a first filter FT1 and a second filter FT2. The first filter FT1 and the second filter FT2 may be implemented as at least one of the series LC resonance circuit and the parallel LC resonance circuit. As illustrated in FIG. 3C, the first filter FT1 may be implemented as the series LC resonance circuit and the second filter FT2 may be implemented as the parallel LC resonance circuit.

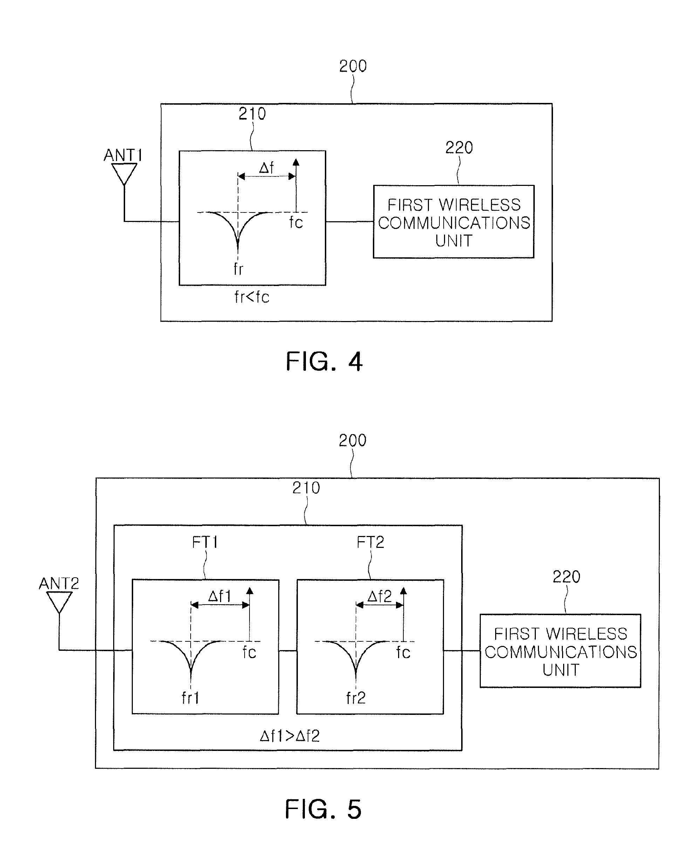

FIG. 4 is a diagram conceptually illustrating an operation of the first neighboring channel removal unit illustrated in FIGS. 3A and 3B and FIG. 5 is a diagram conceptually illustrating an operation of the first neighboring channel removal unit illustrated in FIG. 3C.

Referring to FIG. 4, the first neighboring channel removal unit 210 may remove the neighboring channel signal Snh having the frequency lower than that of the communications channel by the frequency interval Δf included in the frequency range of 550 to 650MHz or the frequency range of 250 to 350MHz. For example, the first neighboring channel removal unit 210 may remove a neighboring channel signal having a frequency matched to a resonance frequency fr by forming the resonance frequency fr in order to remove the neighboring channel signal lower than a center frequency fc of the communications channel.

Referring to FIG. 5, For example, the first filter FT1 may remove a first neighboring channel signal Snh1 having a frequency lower than that of the communications channel by a first frequency interval Δf1 included in the frequency range of 550 to 650MHz. For example, the first filter FT1 may remove the first neighboring channel signal Snh1 having a frequency matched to a first resonance frequency fr1 by forming the first resonance frequency fr1 in a frequency lower than the center frequency fc of the communications channel by the first frequency interval Δf1.

The second filter FT2 may remove a second neighboring channel signal Snh2 having a frequency lower than that of the communications channel by a second frequency interval Δf2 included in the frequency range of 250 to 350MHz. For example, the second filter FT2 may remove the second neighboring channel signal Snh2 having a frequency matched to a second resonance frequency fr2 by forming the second resonance frequency fr2 in a frequency lower than the center frequency fc of the communications channel by the second frequency interval Δf2. The above-mentioned description may be applied to each exemplary embodiment in the present disclosure.

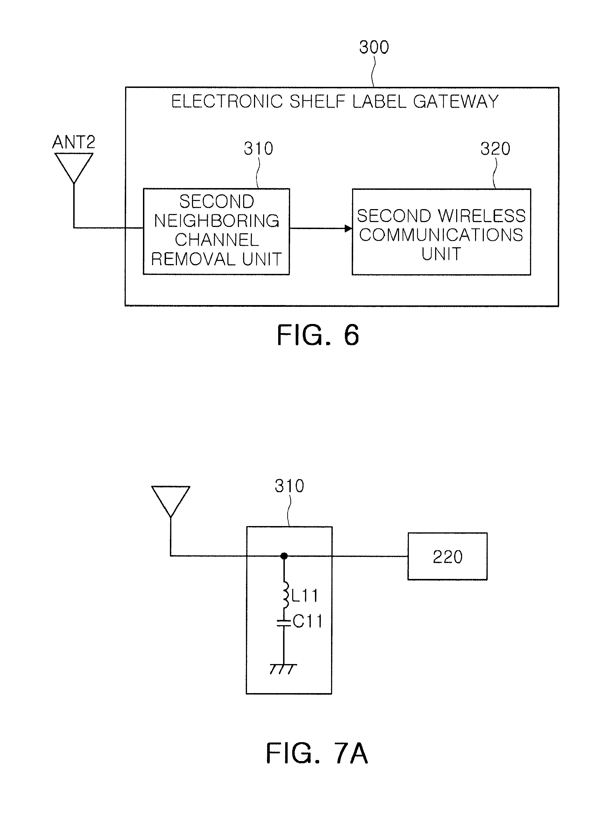

FIG. 6 is a block diagram of an electronic shelf label tag according to an exemplary embodiment in the present disclosure.

Referring to FIG. 6, the electronic shelf label tag 300 according to an exemplary embodiment in the present disclosure may include a second antenna ANT2, a second wireless communications unit 320, and a second neighboring channel removal unit 310.

The second antenna ANT2 of the electronic shelf label tag 300 may transmit the radio signal to the electronic shelf label gateway 200 through the communications channel or receive the radio signal from the electronic shelf label gateway 200 through the communications channel.

The second wireless communications unit 320 may process the radio signal received from the second antenna ANT2, by the second neighboring channel removal unit 310.

The second neighboring channel removal unit 310 may be connected between the second antenna ANT2 and the second wireless communications unit 320 to remove a neighboring channel signal Snh having a frequency lower than a frequency of a communications channel signal Sc by a preset frequency interval Δf, from a neighboring lower channel among neighboring channels of the out-band other than that of an in-band including the communications channel signal.

For example, according to an exemplary embodiment in the present disclosure, in a case in which the frequency signal included in a neighboring channel having a frequency lower than the frequency of the communications channel located in a frequency domain, among the neighboring channels is introduced into the electronic shelf label tag, it has been confirmed that reception sensitivity is significantly degraded.

Therefore, the second neighboring channel removal unit 310 according to an exemplary embodiment in the present disclosure may remove the neighboring lower channel of the communications channel. As a result, the electronic shelf label tag 300 may perform wireless communications without the degradation in reception sensitivity due to the neighboring lower channel.

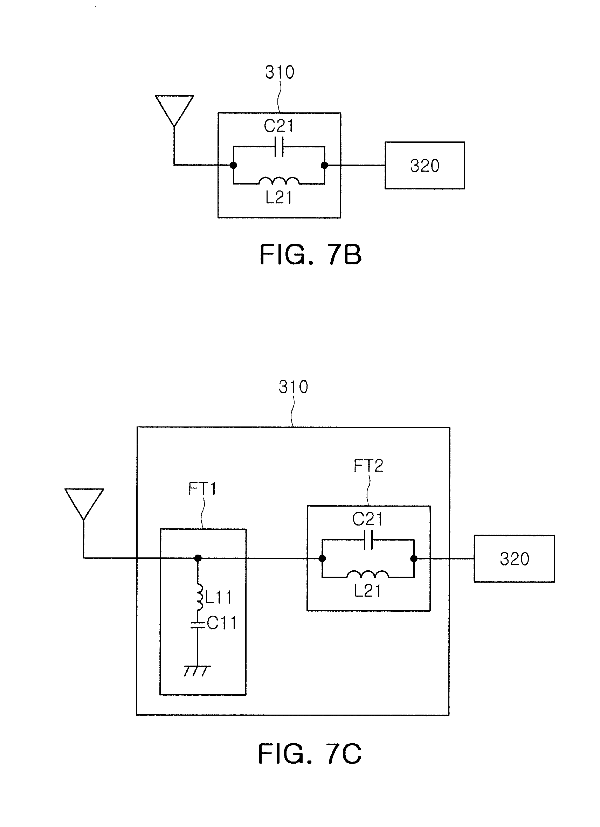

In addition, the second neighboring channel removal unit 310 may include at least one of a series resonance circuit and a parallel resonance circuit. A description thereof will be described with reference to FIGS. 7A, 7B, and 7C.

FIG. 7A illustrates the series resonance circuit as a first implementation example of the second neighboring channel removal unit 310, FIG. 7B illustrates the parallel resonance circuit as a second implementation example of the second neighboring channel removal unit 310, and FIG. 7C illustrates the series resonance circuit and the parallel resonance circuit as a third implementation example of the second neighboring channel removal unit 310.

Referring to FIG. 7A, the second neighboring channel removal unit 310 may include a series LC resonance circuit having a first inductor L11 and a first capacitor C11 connected to each other in series between a signal line between the antenna ANT2 of the electronic shelf label tag 300 and the second wireless communications unit 320 and a ground. For example, a resonance frequency of the series LC resonance circuit may correspond to a frequency lower than that of the communications channel by a frequency interval included in a frequency range of 250MHz to 350MHz or a frequency range of 550MHz to 650MHz among neighboring lower channels.

Referring to FIG. 7B, the second neighboring channel removal unit 310 may include a parallel LC resonance circuit having a second inductor L21 and a second capacitor C21 connected in parallel to a signal line between the antenna ANT2 of the electronic shelf label tag 300 and the second wireless communications unit 320. For example, a resonance frequency of the parallel LC resonance circuit may correspond to a frequency lower than that of the communications channel by a frequency interval included in a frequency range of 250MHz to 350MHz or a frequency range of 550MHz to 650MHz among neighboring lower channels.

Referring to FIGS. 7A and 7B, the second neighboring channel removal unit 310 may be implemented as the series LC resonance circuit or the parallel LC resonance circuit as described above to remove a first neighboring channel signal Snh1 having the frequency lower than that of the communications channel by the first frequency interval Δf1 included in the frequency range of 550 to 650MHz.

Alternatively, the second neighboring channel removal unit 310 may be implemented as the series LC resonance circuit or the parallel LC resonance circuit as described above to remove a second neighboring channel signal Snh2 having the frequency lower than that of the communications channel by the second frequency interval Δf2 included in the frequency range of 250 to 350MHz.

The second neighboring channel removal unit 310 may be a primary filter or at least a secondary filter including at least one of the series LC resonance circuit and the parallel LC resonance circuit.

For example, the second neighboring channel removal unit 310 may be the secondary filter which may include both of the series LC resonance circuit and the parallel LC resonance circuit. Alternatively, the second neighboring channel removal unit 310 may be a secondary or higher filter including at least one series LC resonance circuit and at least one parallel LC resonance circuit.

As such, in the case in which the second neighboring channel removal unit 310 is the secondary or higher filter including a plurality of resonance circuits, a plurality of resonance frequencies formed by each of the plurality of resonance circuits may be different from each other or some of the resonance frequencies may also be equal to each other.

For example, in the case in which the second neighboring channel removal unit 310 is implemented as at least one of the series LC resonance circuit and the parallel LC resonance circuit, the neighboring channel signal included in the neighboring lower channel may be reduced by about 20dB and in-band loss may also be 1dB or less.

In addition, in a case in which the second neighboring channel removal unit 310 described above is implemented as a multi-stage resonance circuit, the in-band loss may be significantly reduced and the signal of the neighboring channel may be further reduced. Meanwhile, in a case in which the second neighboring channel removal unit 310 is implemented as one-stage resonance circuit, since the first neighboring channel removal unit 310 may be implemented as a simplest resonance circuit possible using one L element and one C element, reception performance may be efficiently improved at minimal cost.

Referring to FIG. 7C, the second neighboring channel removal unit 310 may include a first filter FT1 and a second filter FT2. The first filter FT1 and the second filter FT2 may be implemented as at least one of the series LC resonance circuit and the parallel LC resonance circuit. As illustrated in FIG. 7C, the first filter FT1 may be implemented as the series LC resonance circuit and the second filter FT2 may be implemented as the parallel LC resonance circuit.

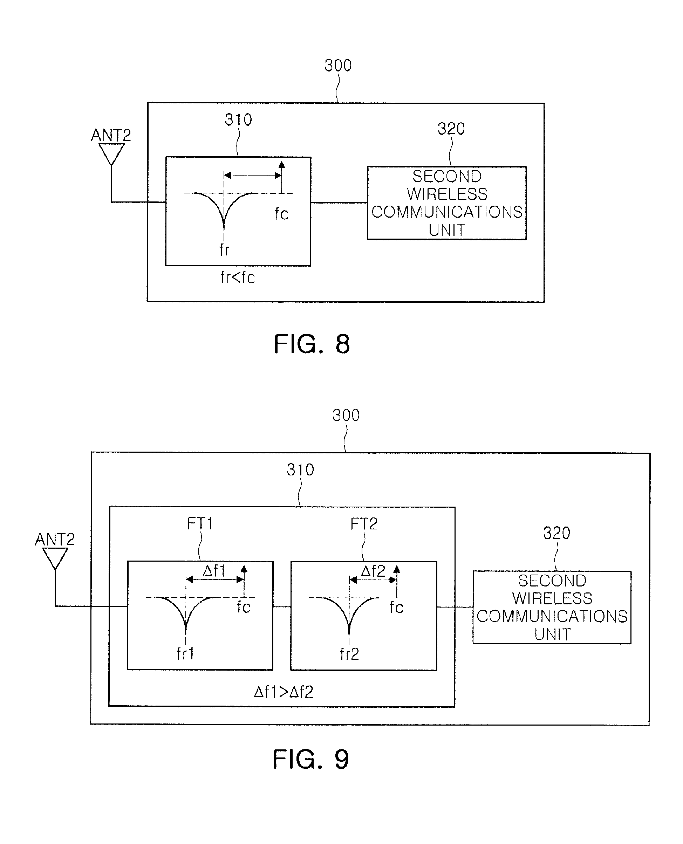

FIG. 8 is a diagram conceptually illustrating an operation of the second neighboring channel removal unit illustrated in FIGS. 7A and 7B, and FIG. 9 is a diagram conceptually illustrating an operation of the second neighboring channel removal unit illustrated in FIG. 7C.

Referring to FIG. 8, the second neighboring channel removal unit 310 may remove a neighboring channel signal Snh having a frequency lower than that of the communications channel by the frequency interval Δf included in the frequency range of 550 to 650MHz or the frequency range of 250 to 350MHz.

Referring to FIG. 9, For example, the first filter FT1 may remove a first neighboring channel signal Snh1 having a frequency lower than that of the communications channel by a first frequency interval Δf1 included in the frequency range of 550 to 650MHz.

The second filter FT2 may remove a second neighboring channel signal Snh2 having a frequency lower than that of the communications channel by a second frequency interval Δ f2 included in the frequency range of 250 to 350MHz.

As described above, the electronic shelf label tag or the electronic shelf label gateway according to an exemplary embodiment in the present disclosure may efficiently remove the neighboring channel signal included in the neighboring lower channel farther away from the communications channel than the adjacent channel in the frequency domain. For example, even in a case in which a communications frequency of 2.4GHz is used, the signal included in the neighboring lower channel among the neighboring channels of the out-band may be simply removed.

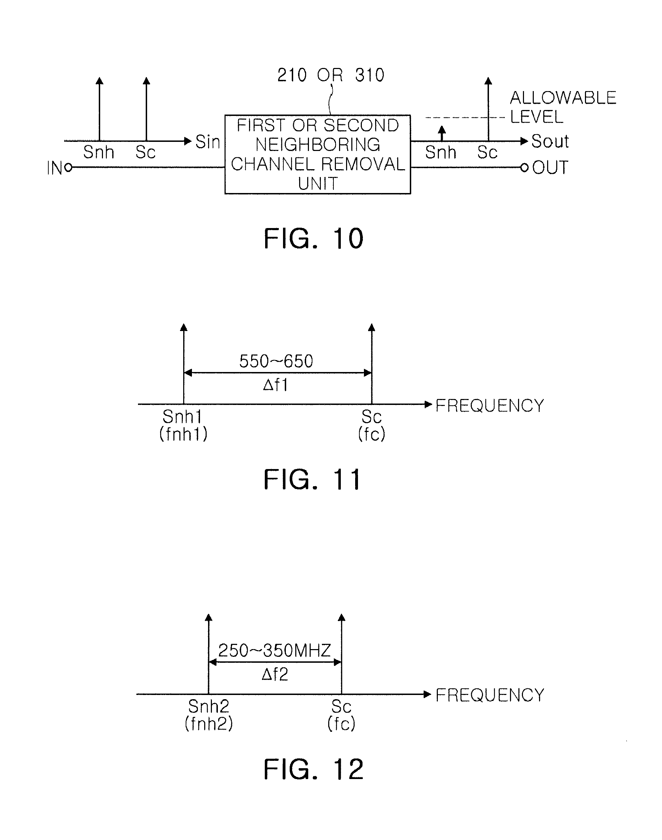

FIG. 10 is a diagram illustrating input and output signals of the first and second neighboring channel removal units according to an exemplary embodiment in the present disclosure.

Referring to FIG. 10, when an input signal Sin which is input includes a neighboring channel signal Snh and a communications signal Sc, since the first or second neighboring channel removal unit 210 or 310 according to an exemplary embodiment in the present disclosure may remove only the neighboring channel signal Snh among two signals, only the communications signal Sc may be included in a signal Sout output from the first or second neighboring channel removal unit 210 or 310. Even in a case in which the neighboring channel signal is included in the communications signal, a level of the neighboring channel signal may be significantly attenuated to be negligible by the first or second neighboring channel removal unit 210 or 310 after an allowable level.

FIG. 11 is a diagram illustrating a first frequency interval according to an exemplary embodiment in the present disclosure and FIG. 12 is a diagram illustrating a second frequency interval according to an exemplary embodiment in the present disclosure.

The neighboring channel according to an exemplary embodiment in the present disclosure will be described with reference to FIGS. 11 and 12. First, referring to FIG. 11, the neighboring channel in the electronic shelf label system according to an exemplary embodiment in the present disclosure may be a signal having a frequency lower than a center frequency fc of a communications channel signal Sc used in the electronic shelf label system by a frequency interval included in a frequency range of about 250MHz to 350MHz.

Referring to FIG. 12, the neighboring channel in the electronic shelf label system according to an exemplary embodiment in the present disclosure may be a signal having a frequency lower than the center frequency fc of the communications channel signal Sc used in the electronic shelf label system by a frequency interval included in a frequency range of about 550MHz to 650MHz.

As described above, in the case in which the electronic shelf label system is installed in a mall, or the like, various frequency signals used in other wireless communications networks are present. In detail, in the case in which the radio frequency signal having high power is included in the neighboring channel located at the lower portion of the communications channel, there is a high possibility that reception performance of the electronic shelf label tag or the electronic shelf label gateway is degraded.

In a case in which the electronic shelf label tag or the electronic shelf label gateway according to an exemplary embodiment in the present disclosure is applied to the electronic shelf label system described above, the neighboring channel may be efficiently removed by the neighboring channel removal unit. Particularly, in the case in which the neighboring channel removal unit is implemented by a simple resonance circuit, degradation in reception performance may be prevented at minimal cost, in-band loss may be significantly reduced, and performance degradation of the electronic shelf label tag or the electronic shelf label gateway may also be significantly reduced.

As set forth above, according to exemplary embodiments of the present disclosure, since the signals by other wireless communications networks using the lower frequency of the communications channel may be removed, the electronic shelf label tag or the electronic shelf label gateway may wirelessly communicate without being influenced by the signals of other wireless communications networks using a lower frequency, by allowing the signals of other wireless communications networks using the lower frequency not to be introduced.

While exemplary embodiments have been shown and described above, it will be apparent to those skilled in the art that modifications and variations could be made without departing from the scope of the present invention as defined by the appended claims.

## Claims

1. An electronic shelf label gateway transmitting a radio signal including identification ID from an electronic shelf label server to an electronic shelf label tag and responding to a data request from the electronic shelf label tag, the electronic shelf label gateway comprising:
a first antenna receiving the radio signal from the electronic shelf label tag;
a first wireless communications unit processing the radio signal received from the first antenna; and
a first neighboring channel removal unit connected between the first antenna and the first wireless communications unit to remove a neighboring channel signal having a frequency lower than a frequency of a communications channel signal by a preset frequency interval.

2. The electronic shelf label gateway of claim 1, wherein the first neighboring channel removal unit includes at least one of a series resonance circuit and a parallel resonance circuit.

3. The electronic shelf label gateway of claim 1, wherein the first neighboring channel removal unit removes a first neighboring channel signal having a frequency lower than a frequency of the communications channel by a first frequency interval included in a frequency range of 550 to 650MHz.

4. The electronic shelf label gateway of claim 1, wherein the first neighboring channel removal unit removes a second neighboring channel signal having a frequency lower than a frequency of the communications channel by a second frequency interval included in a frequency range of 250 to 350MHz.

5. The electronic shelf label gateway of claim 1, wherein the first neighboring channel removal unit includes:
a first filter removing a first neighboring channel signal having a frequency lower than a frequency of the communications channel by a first frequency interval included in a frequency range of 550 to 650MHz; and
a second filter removing a second neighboring channel signal having a frequency lower than a frequency of the communications channel by a second frequency interval included in a frequency range of 250 to 350MHz.

6. An electronic shelf label tag receiving a radio signal including identification ID from an electronic shelf label server through an electronic shelf label gateway and requesting data from the electronic shelf label server through the electronic shelf label gateway when identification ID included in the radio signal is matched to self identification ID, the electronic shelf label tag comprising:
a second antenna receiving the radio signal from the electronic shelf label gateway;
a second wireless communications unit processing the radio signal received from the second antenna; and
a second neighboring channel removal unit connected between the second antenna and the second wireless communications unit to remove a neighboring channel signal having a frequency lower than a frequency of a communications channel signal by a preset frequency interval.

7. The electronic shelf label tag of claim 6, wherein the second neighboring channel removal unit includes at least one of a series resonance circuit and a parallel resonance circuit.

8. The electronic shelf label tag of claim 6, wherein the second neighboring channel removal unit removes a first neighboring channel signal having a frequency lower than a frequency of the communications channel by a first frequency interval included in a frequency range of 550 to 650MHz.

9. The electronic shelf label tag of claim 6, wherein the second neighboring channel removal unit removes a second neighboring channel signal having a frequency lower than a frequency of the communications channel by a second frequency interval included in a frequency range of 250 to 350MHz.

10. The electronic shelf label tag of claim 6, wherein the second neighboring channel removal unit includes:
a first filter removing a first neighboring channel signal having a frequency lower than a frequency of the communications channel by a first frequency interval included in a frequency range of 550 to 650MHz; and
a second filter removing a second neighboring channel signal having a frequency lower than a frequency of the communications channel by a second frequency interval included in a frequency range of 250 to 350MHz.
